# EUROPEAN PATENT SPECIFICATION

(11) **EP 3 473 040 B1**
(45) Date of publication and mention of the grant of the patent: **07.10.2020**
(21) Application number: 17839885.5
(22) Date of filing: 11.08.2017
(51) Int. Cl.: H04W 36/00, H04W 36/32, H04W 88/02, H04W 4/029, H04W 4/06, H04W 4/40, H04W 76/10, H04W 88/16, H04L 29/08

(54) **V2X COMMUNICATION METHOD AND TERMINAL**
VERFAHREN UND ENDGERÄT FÜR V2X-KOMMUNIKATION
PROCÉDÉ DE COMMUNICATION V2X ET TERMINAL

(30) Priority: 12.08.2016 KR 20160102932
(43) Date of publication of application: 24.04.2019
(73) Proprietor: Samsung Electronics Co., Ltd., Suwon-si, Gyeonggi-do 16677 (KR)
(72) Inventor: KIM, Sunghoon, Suwon-si, Gyeonggi-do, 16677 (KR); BAEK, Youngkyo, Suwon-si, Gyeonggi-do, 16677 (KR); LEE, Duckey, Suwon-si, Gyeonggi-do, 16677 (KR); LEE, Hoyeon, Suwon-si, Gyeonggi-do, 16677 (KR)
(74) Representative: Gulde & Partner
(86) International application number: PCT/KR2017/008806
(87) International publication number: WO 2018/030868

(56) References cited:
- KR-A- 20110 065 262
- KR-B1- 101 585 207
- US-A1- 2010 254 346
- US-A1- 2011 188 472
- LG ELECTRONICS: "Conclusion for local V2X server discovery", 3GPP DRAFT; S2-163714_V2X_SERVER DISCO, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. Vienna, Austria; 20160711 - 20160715 5 July 2016 (2016-07-05), XP051121392, Retrieved from the Internet: URL:http://www.3gpp.org/ftp/tsg_sa/WG2_Arc h/TSGS2_116_Vienna/Docs/ [retrieved on 2016-07-05]
- LG ELECTRONICS: "Conclusion for local V2X server discovery", 3GPP TSG SA WG2 Meeting #116, 5 July 2016 (2016-07-05), pages 2-163714, XP051121392, Vienna, Austria Retrieved from the Internet: URL:http://www.3gpp.org/ftp/tsg_sa/WG2_Arc h/TSGS2_116_Vienna/Docs
- KPN et al.: "New key issue#6d, and Modification of key issue #6c: Local V2X server discovery", 3GPP TSG SA WG2 Meeting #116, 17 July 2016 (2016-07-17), pages 2-163754, XP051121513, Vienna, Austria Retrieved from the Internet: URL:http://www.3gpp.org/ftp/tsg_sa/WG2_Arc h/TSGS2_116_Vienna/Docs
- HUAWEI et al.: "V2X Service Authorization and Parameter Provisioning", 3GPP TSG SA WG2 Meeting #116, 5 July 2016 (2016-07-05), pages 2-163525, XP051121218, Vienna, Austria Retrieved from the Internet: URL:http://www.3gpp.org/ftp/tsg_sa/WG2_Arc h/TSGS2_116_Vienna/Docs

## Description

### Technical Field

The present disclosure relates to a method and apparatus for connecting a terminal capable of a vehicle-to everything (V2X) communication to a V2X server.

### Background Art

In order to meet the increasing demand for wireless data traffic since the commercialization of 4^{th} generation (4G) communication systems, the development focus is on the 5^{th} generation (5G) or pre-5G communication system. For this reason, the 5G or pre-5G communication system is called a beyond 4G network communication system or post long-term evolution (LTE) system.

Consideration is being given to implementing the 5G communication system in millimeter wave (mmW) frequency bands (e.g., 60 GHz bands) to accomplish higher data rates. In order to increase the propagation distance by mitigating propagation loss in the 5G communication system, discussions are underway about various techniques such as beamforming, massive multiple-input multiple output (MIMO), full dimensional MIMO (FD-MIMO), array antenna, analog beamforming, and large-scale antenna.

Also, in order to enhance network performance of the 5G communication system, developments are underway of various techniques such as evolved small cell, advanced small cell, cloud radio access network (RAN), ultra-dense network, device to device (D2D) communication, wireless backhaul, moving network, cooperative communication, coordinated multi-points (CoMP), and interference cancellation.

Furthermore, the ongoing research includes the use of hybrid frequency shift keying (FSK) and quadrature amplitude modulation (QAM) and sliding window superposition coding (SWSC) as advanced coding modulation (ACM), filter bank multi carrier (FBMC), non-orthogonal multiple access (NOMA), and sparse code multiple access (SCMA).

Meanwhile, the Internet is evolving from a human-centric communication network in which information is generated and consumed by humans to the internet of things (IoT) in which distributed things or components exchange and process information. The combination of the cloud server-based big data processing technology and the IoT begets internet of everything technology.

In order to secure the sensing technology, wired/wireless communication and network infrastructure, service interface technology, and security technology required for implementing the IoT, recent research has focused on sensor network, machine to machine (M2M), and machine type communication (MTC) technologies.

In the IoT environment, it is possible to provide an intelligent Internet Technology that is capable of collecting and analyzing data generated from connected things to create new values for human life. The IoT can be applied to various fields such as smart home, smart building, smart city, smart car or connected car, smart grid, health care, smart appliance, and smart medical service through legacy information technology (IT) and convergence of various industries.

Thus, there are various attempts to apply the IoT to the 5G communication system. For example, the sensor network, machine to machine (M2M), and machine type communication (MTC) technologies are implemented by means of the 5G communication technologies such as beamforming, MIMO, and array antenna. The application of the aforementioned cloud RAN as a big data processing technology is an example of convergence between the 5G and IoT technologies.

Another good example is vehicle-to-everything (V2X) technology for communication between a vehicle and entities on the road to implement the so-called "connected vehicle" or "networked vehicle." V2X communication incorporates three types of communication: vehicle-to-infrastructure (V2I), vehicle-to-vehicle (V2V), and vehicle-to-pedestrian (V2P).

The technical development of V2I and V2V aims at improving road safety and, in addition to the initial safety-related use cases, consideration is being given to various supplementary IT services in line with the advance of radio communication technologies and convergence therewith within a few years. The countries advanced in telematics/ITS technologies such as the countries of the European Union (EU), Japan, and Korea have been verifying the technical practicability and applicability through large scale projects.

In accordance with such a tendency, the 3^{rd} generation partnership project (3GPP) has initiated standardization for LTE-advanced-based V2X. In the case of V2I, consideration is being given to allowing communication with enhanced NodeBs (eNBs) or road-side-units (RSUs) as communication facilities installed alongside the road. Here, an RSU may be recognized as an eNB or a user equipment (UE) by neighboring vehicles.

Document LG ELECTRONICS: "Conclusion for local V2X server discovery", 3GPP DRAFT; S2-163714_V2X_SERVER DISCO, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE,vol. SA WG2, no. Vienna, Austria; 20160711 - 20160715 5 July 2016 (2016-07-05) discloses techniques for local V2X server discovery.

Although the LTE-based V2X communication can be implemented with the reuse of the legacy communication technology as described above, it may be necessary to carry out some technical modification of the legacy communication scheme to meet the requirements for V2X communication.

### Disclosure of Invention

### Technical Problem

To address the above-discussed deficiencies, it is a primary object to provide disclosure a method for reducing any unnecessary delay in starting V2X communication.

The objects of the present disclosure are not limited to the aforesaid, and other objects not described herein will be clearly understood by those skilled in the art from the descriptions below.

### Solution to Problem

The invention is defined by the independent claims. Preferred embodiments are defined in the dependent claims.

### Advantageous Effects of Invention

The present disclosure is advantageous in terms of facilitating establishment of a connection to a local V2X server based on the connection provision information for connection to a local V2X server, the connection provision information being received in advance from a macro V2X server. This makes it possible to reduce the delay required for a terminal entering a local area to start V2X communication with the local V2X server.

The other effects may be explicitly or implicitly disclosed in the description of the embodiments of the present disclosure. That is, various effects expected from the present disclosure will become clear in the following description of the embodiments of the present disclosure.

### Brief Description of Drawings

For a more complete understanding of the present disclosure and its advantages, reference is now made to the following description taken in conjunction with the accompanying drawings, in which like reference numerals represent like parts:
FIG. 1 illustrates a wireless communication system environment according to an embodiment of the present disclosure;
FIG. 2 illustrates a scenario of connection between a terminal and a local V2X server according to an embodiment of the present disclosure;
FIGs. 3a, 3b, 4, and 5 illustrate signal flows in a V2X communication system according to an embodiment of the present disclosure;
FIG. 6 illustrates a configuration of a network entity according to an embodiment of the present disclosure;
FIG. 7 illustrates a flow chart of a communication procedure of a terminal according to an embodiment of the present disclosure; and
FIG. 8 illustrates another flow chart of a communication procedure of a terminal according to an embodiment of the present disclosure.

### Mode for the Invention

Before undertaking the detailed description below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely.

Moreover, various functions described below can be implemented or supported by one or more computer programs, each of which is formed from computer readable program code and embodied in a computer readable medium. The terms "application" and "program" refer to one or more computer programs, software components, sets of instructions, procedures, functions, objects, classes, instances, related data, or a portion thereof adapted for implementation in a suitable computer readable program code. The phrase "computer readable program code" includes any type of computer code, including source code, object code, and executable code. The phrase "computer readable medium" includes any type of medium capable of being accessed by a computer, such as read only memory (ROM), random access memory (RAM), a hard disk drive, a compact disc (CD), a digital video disc (DVD), or any other type of memory. A "non-transitory" computer readable medium excludes wired, wireless, optical, or other communication links that transport transitory electrical or other signals. A non-transitory computer readable medium includes media where data can be permanently stored and media where data can be stored and later overwritten, such as a rewritable optical disc or an erasable memory device.

Definitions for certain words and phrases are provided throughout this patent document, those of ordinary skill in the art should understand that in many, if not most instances, such definitions apply to prior, as well as future uses of such defined words and phrases.

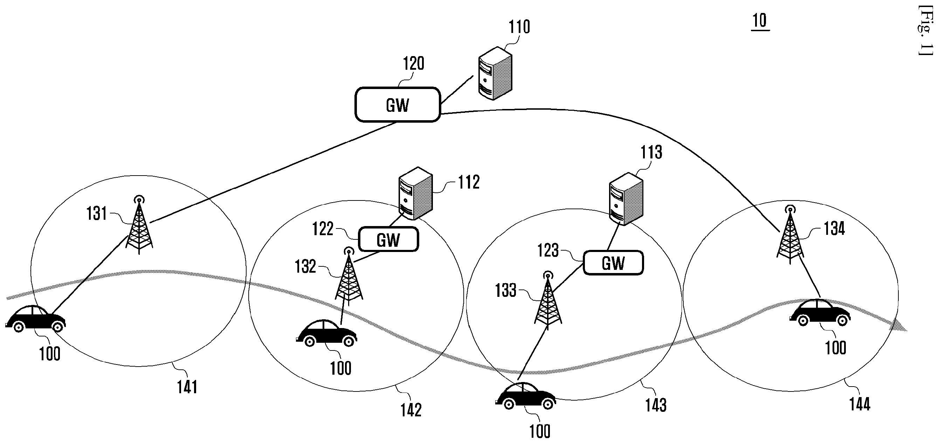

FIGS. 1 through 8, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged system or device.

Exemplary embodiments of the present disclosure are described in detail with reference to the accompanying drawings. The same reference numbers are used throughout the drawings to refer to the same or like parts; detailed descriptions of well-known functions and structures incorporated herein may be omitted to avoid obscuring the subject matter of the present disclosure. Further, the following terms are defined in consideration of the functionality in the present disclosure, and they may vary according to the intention of a user or an operator, usage, etc. Therefore, the definition should be made on the basis of the overall content of the present specification.

As used herein, the singular forms "a," "an," and "the" are intended to include the plural forms as well, unless the context clearly indicates otherwise. For example, the expression "a component surface" is intended to include one or more component surfaces.

As used herein, ordinal terms such as "first," "second," etc. are used to describe various components; however, it is obvious that the components should not be defined by these terms. The terms are used only for distinguishing one component from another component. For example, a first component may be referred to as a second component and, likewise, a second component may also be referred to as a first component, without departing from the teaching of the inventive concept. Also, the expression "and/or" is taken as specific disclosure of each and any combination of enumerated things.

The terminology used herein is for the purpose of describing particular embodiments only and is not intended to be limiting of the disclosure. As used herein, singular forms are intended to include the plural forms as well, unless the context clearly indicates otherwise. It will be understood that the terms "comprises" and/or "has" when used in this specification, specify the presence of a stated feature, number, step, operation, component, element, or a combination thereof; but they do not preclude the presence or addition of one or more other features, numbers, steps, operations, components, elements, or combinations thereof.

The phrases "associated with" and "associated therewith" as well as derivatives thereof may mean to include, be included within, interconnect with, contain, be contained within, connect to or with, couple to or with, be communicable with, cooperate with, interleave, juxtapose, be proximate to, be bound to or with, have, have a property of, or the like.

When it is described that a part is (functionally or communicably) "connected to" or "coupled to" another part, this may mean to include not only a case of "being directly connected to" but also a case of "being indirectly connected to" by interposing another device therebetween.

Unless otherwise defined herein, all terms including technical or scientific terms used herein have the same meanings as commonly understood by those skilled in the art to which the present disclosure belongs. It will be further understood that terms, such as those defined in commonly used dictionaries, should be interpreted as having a meaning that is consistent with their meaning in the context of the specification and relevant art and should not be interpreted in an idealized or overly formal sense unless expressly so defined herein.

In an embodiment of the present disclosure, the term "terminal" is intended to cover entities capable of communicating with a base station or another terminal, the entity being referred to as a user equipment (UE), a mobile station (MS), a mobile equipment (ME), a device, and a terminal. Examples of a terminal include a communication interface (communication module, transceiver), an on-board diagnostics (OBD), a navigator, a smartphone, a tablet personal computer (PC), a mobile phone, a video conference phone, an electronic book (e-book) reader, a desktop PC, a laptop PC, a netbook PC, a personal digital assistant (PDA), a portable multimedia player (PMP), an mp3 player, a mobile medical appliance, a camera, a wearable device (e.g., head-mounted device (HMD)), an electronic cloth, an electronic bracelet, an electronic necklace, an electronic appcessory, an electronic tattoo, and a smart watch.

In an embodiment of the present disclosure, the term vehicle is intended to cover vehicles for transporting passengers and loads and equipped with a V2X-enabled terminal. Examples of a vehicle include a car, an airplane, a motorcycle, a bicycle including an electric bicycle, an electric wheel, a ship, and a train.

In the case where a terminal is implemented as a part of a vehicle, the vehicle is capable of V2X communication by means of the terminal. In the case where a user carrying a V2X-enabled terminal gets on a vehicle, the vehicle is capable of performing V2X communication by means of the terminal carried by the user.

In an embodiment of the present disclosure, the V2X communication may be intended to cover data communication for providing a V2X service. For example, the V2X communication may include data communication for traffic safety, traffic volume, and automatic vehicle control. The V2X communication for traffic safety may be intended to provide information on ahead accident warning, collision warning, emergency stop assistance, and pedestrian presence warning. The V2X communication for traffic volume may be intended to provide navigation information indicating congested areas. The V2X communication for automatic vehicle control may be intended to provide information for executing an automatic parking function or automatic driving function. A V2X communication-enabled terminal may be referred to as a V2X terminal. A V2X terminal may receive service traffic for V2X service from a V2X server.

The V2X server may be a server providing a V2X service through V2X communication. V2X servers may be categorized into two types: macro V2X servers taking charge of macro areas (or an entire region) and local V2X servers taking charge of (or operating or responsible for) local areas as parts of a macro area. A macro V2X server may provide the V2X service within the corresponding macro area, and a local V2X server may provide the V2X service within the corresponding local area. In this case, the local V2X server may be located (or collocated) with a RSU as a communication facility installed alongside the road. A local area may be equivalently equal to or less than a cellular communication coverage area (or cell) of a base station or correspond to cellular communication coverage areas of multiple base stations.

The terminal may perform V2X communication with the local V2X server managing the corresponding local area to mitigate data delay during the V2X communication with the macro V2X server. In this case, it may be necessary to achieve data synchronization (data-sync) between the local and macro V2X servers to continue providing the V2X service.

The terminal may also select a local V2X server of the local area where it is located for V2X communication to transmit a message immediately when an emergency occurs.

The terminal may also transmit a V2X communication message to notify the local V2X server managing the corresponding local area of the terminal presence therein when it enters the local area being managed by the local V2X server.

The terminal may also perform V2X communication with a local V2X server through a localized multimedia broadcast multicast service (MBMS) channel. The MBMS is a point-to-multipoint bearer service for broadcasting data in one way from a single source to plural terminals. The MBMS is an Internet protocol (IP) multicast-based service specified by 3GPP working groups for use in cellular communication networks.

In the case of attempting to connect to a local V2X server, the terminal may need provision information for connection to the local V2X server.

The provision information for use in connection to the local V2X server may include identity information of the local V2X server and a local gateway to which the local V2X server is connected. The identity information of the local V2X server may include an IP address of the local V2X server.

In the case of attempting to perform V2X communication through an MBMS channel, the terminal may need provision information for use in communication through the MBMS channel.

The provision information for use in communication through the MBMS channel may include an IP multicast address for identifying the MBMS to join, an access point name (APN) associated with the IP multicast address, temporary mobile group identity information for identifying the MBMS of a public land mobile network (PLMN), an MBMS service area in which MBMS session data are broadcast, radio frequency information, and session stand and end times. The provision information may further include user service description (USD) specifying per-layer technical details for MBMS.

FIG. 1 illustrates a wireless communication system environment according to an embodiment of the present disclosure.

In FIG. 1, the wireless communication system environment 10 includes a macro V2X server 110, a macro gateway 120, a first and a second local V2X server 112, a second local V2X server 113, a first local gateway 122, a second local gateway 123, a first base station 131, a second base station 132, a third base station 133, a fourth base station 134, and a V2X terminal installed in a vehicle (or V2X vehicle) 100.

The roles of the macro V2X server 110 and the local V2X servers 112 and 113 have been described above; thus, detailed descriptions thereof are omitted herein.

The base stations 131 to 134 are cellular network access nodes to which the terminal 100 connects for cellular radio communication. The base stations 131 to 134 may support connection between the terminal 100 and a core network through scheduling based on status information such as buffer status, power headroom status, and channel status of the terminal 100. In an embodiment of the present disclosure, the base stations 131 to 134, as entities communicating with the terminal 100, may be referred to as BS, node B (NB), enhanced NB (eNB), or access point (AP).

The local gateways 122 and 123 may route packets in the cellular and external communication network, provides a firewall, and allocate and address (e.g., IP address) to at least one terminal 100. Each of the local gateways 122 and 123 may include at least one of a serving gateway and a packet data network gateway.

The serving gateway may serve as an anchor for handover of the terminal 100 between the base stations 131 to 134. The packet data network gateway may allocate an IP address to the terminal 100 and serve as an anchor for the serving gateway, conduct quality of service (QoS) policy enforcement per terminal, and manage accounting data associated with traffic amount and connection time per terminal.

Typically, the data generated by the terminal 100 may be transmitted to an external PDN such as the Internet via one of the base stations 131 to 134, a serving gateway, and a PDN gateway.

In FIG. 1, the V2X communication-enabled terminal (or V2X terminal) 100 may not have information on the local V2X servers 112 and 113 in the areas to which it is likely to move.

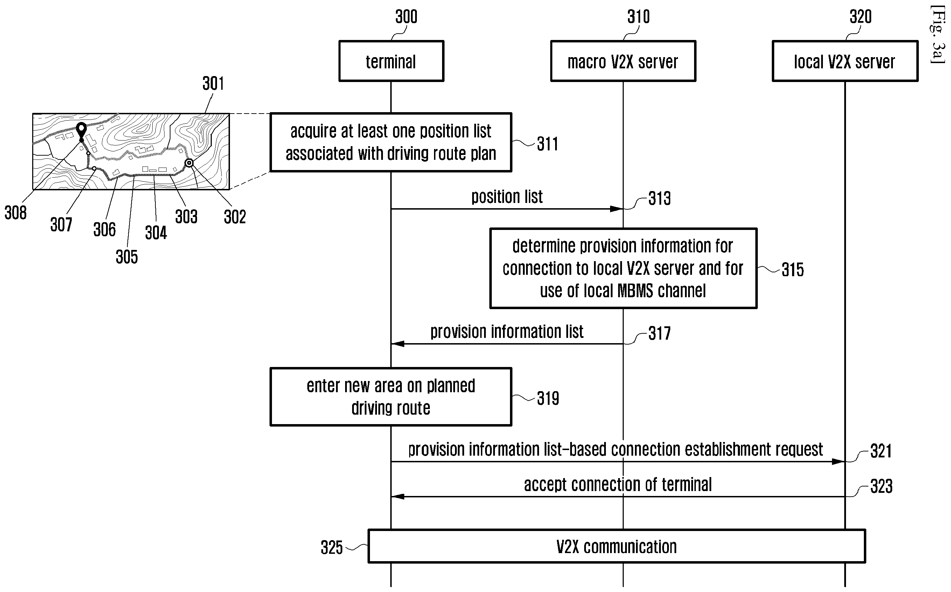

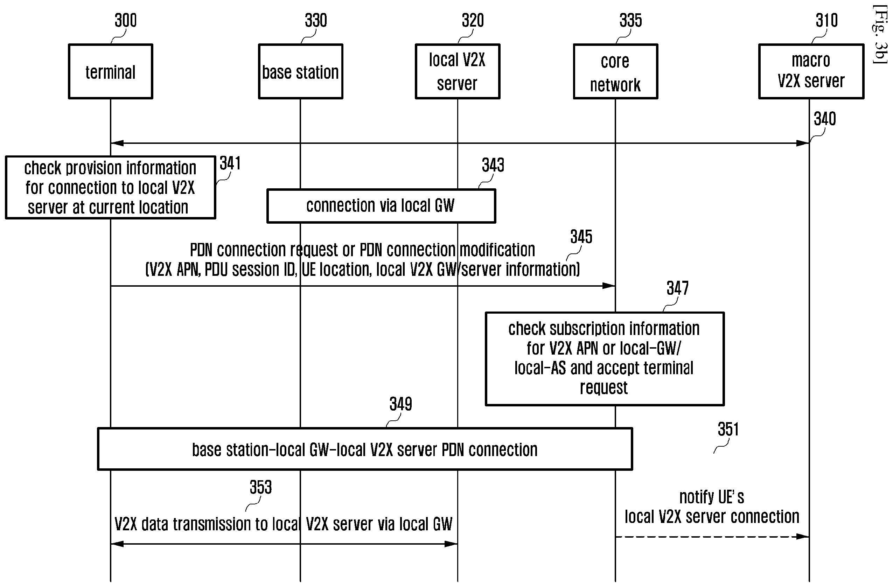

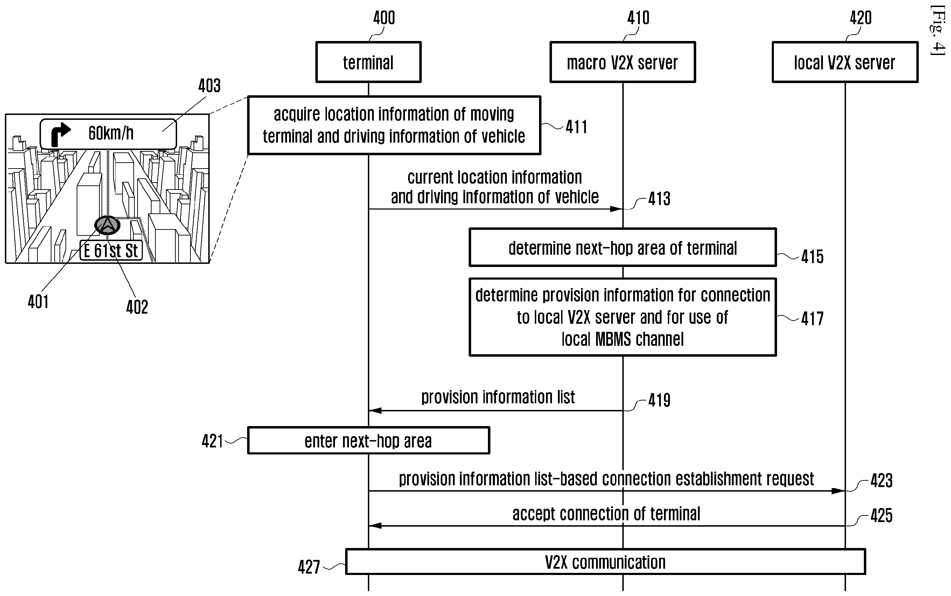

In this case, the terminal 100 located in a first area (or first cell) 141) may transmit the terminal's mobility information to the macro V2X server 110 via the first base station 131 as the access node of the first area 141 and the macro gateway 120 to discover local V2X servers 112 and 113 available in the areas 142 to 144. The mobility information is elaborated later in the descriptions of the embodiments of FIGs. 3a, 3b, and 4.

The macro V2X server 110 may determining provision information for connection to the first and second local V2X servers 112 and 113 associated with the areas to which the terminal 100 may move based on the received mobility information and transmit the provision information to the terminal 100. The provision information may include the IP addresses of the local V2X servers as their identity information. In this case, the macro V2X server 110 may transmit to the terminal 100 the base station names (eNB names) and E-UTRAN cell global identifier (ECGI) as identity information of the cellular network of the base stations that allow for connection to the first and second local V2X servers 112 and 113.

Next, the V2X terminal 100 may move to the second area (or second cell) 142). If the terminal 100 enters the second area 142, it may establish a connection to the first local V2X server 112 via the second base station 132 as the access node of the second area 142 and the first local gateway 122 based on the provision information for connection to the first local V2X server 112 that has been received from the macro V2X server 110.

The terminal 100 may establish a connection to the first local V2X server 112 by selecting the second base station 132 based on the base station name (eNB name) or ECGI received from the macro V2X server 110. That is, if there are multiple base stations available in the area where the terminal 100 is located, the terminal 100 may determine the priorities of the base stations to connect based on the information received from the macro V2X server 110.

If a connection to the first local V2X server 112 is established, the terminal 100 may perform V2X communication with the first local V2X server 112.

For example, if the terminal 100 enters the second area 142, it may request to the first local gateway 122 for connection to the PDN to access the first local V2X server 112. If a connection to the PDN is established, the terminal may connect to the first local V2X server 112 via the PDN to perform V2X communication.

Subsequently, the terminal 100 may move to the third area (or third cell) 143). Upon entering the third area 143, the terminal 100 may establish a connection to the second local V2X server 113 via the third base station 133 as an access node of the third area and the second local gateway 123 based on the provision information for connection to the second local V2X server 113, the provision information being received from the macro V2X server 110. The terminal 110 may perform V2X communication with the second local V2X server 113.

Afterward, the terminal 100 may move to the fourth area (or fourth cell) 144. If there is no local V2X server available within the fourth area 144 as shown in FIG. 1, the V2X terminal 100 may establish a connection to the macro V2X server 110 via the fourth base station 134 as an access node of the fourth area 144 and the macro gateway 120. Then the terminal 100 may perform V2X communication with the macro V2X server 110.

According to the embodiment of FIG. 1, if the V2X terminal 100 receives and stores the provision information for connection to the local V2X servers 112 and 113 taking charge the local areas that the V2X terminal 110 is likely to enter, it may be possible to reduce the delay required for starting V2X communication with one of the local servers 112 and 113 in the corresponding local area.

In detail, the V2X terminal 100 is likely to move so fast and thus cross the boundary between local areas frequently in comparison with a normal terminal. For this reason, the V2X terminal 100 may have to establish and release a connection to acquire information required for a local MBMS service channel every time that it crosses the boundary, resulting in unnecessary waste of time. In particular, as the cell becomes smaller, there is an increase in the amount of provision information needed for use by the V2X terminal 100 for connection to the local V2X servers 112 and 113 and access to a local MBMS service.

In order to overcome this problem, consideration can be given to the V2X 100 acquiring in advance the identity information of the local V2X servers 112 and 113 associated with the areas that the V2X terminal 100 is likely to enter and the provision information for use of the local MBMS service channels from the macro V2X server 110.

If the V2X terminal 100 on the move enters a new area, the V2X terminal 100 may establish a connection immediately to a local V2X server taking charge of the new area based on the provision information, thereby reducing any waste of time required for signaling with the local V2X server.

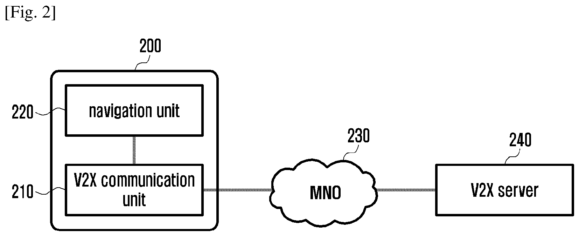

FIG. 2 illustrates a scenario of connection between a terminal and a local V2X server according to an embodiment of the present disclosure.

In reference to FIG. 2, a terminal 200 may include a V2X communication unit (or V2X transceiver) 210 and a navigation unit (or navigation module) 220. However, the present disclosure is not limited to this configuration, and the navigation unit 220 may be implemented as a device or a module installed in a vehicle separated from the terminal 100.

The navigation unit 220 may send the V2X communication unit 210 at least one of mobility information of the V2X terminal 200 (or vehicle on which the V2X module 200 is mounted) and driving information of the vehicle on which the V2X module 200 is mounted.

The mobility information may include geographical position lists associated with a driving route plan to reach the destination of the V2X terminal 200 and current geographical position of the V2X terminal 200. The driving information may include a travel speed of the vehicle, a name and a type of the road on which the vehicle is traveling, and a type of vehicle. The mobility information and driving information are elaborated in the descriptions of the embodiments of FIGs. 3a, 3b, and 4.

In FIG. 2, the V2X service provider for providing the V2X service through a local V2X server 240 may be identical with or different from a mobile network operator (MNO) operating a network 230 depending on the embodiment.

If the MNO is different from the V2X service provider, the V2X service provider may execute a service level agreement (SLA) with the MNO.

In this case, the V2X service provider may transmit to the terminal 200 a base station name (eNB name) as an identifier of the cellular network access node and an ECGI as cellular network identity information along with the provision information for connection to the local V2X server 240 and for use of the MBMS service channel.

FIGs. 3a, 3b, 4, and 5 are signal flow diagrams illustrating signal flows in a V2X communication system according to an embodiment of the present disclosure.

According to the embodiment of FIG. 3a, a terminal 300 may communicate with a local V2X server 320 based on the terminal's planned driving route.

In reference to FIG. 3a, the terminal 300 may acquire a geographical position list associated with the driving route plan for the destination of the terminal 300 from a navigation unit (not shown) at step 311. Here, the navigation unit may include a navigation application. The navigation unit may be installed in the terminal 400 or a device separated from the terminal 300 and, in the case where it is installed in a separated device, it transmits the geographical position list to the terminal 300 as described with reference to FIG. 2.

As denoted by reference number 301, the navigation unit may comprise a planned driving route of the terminal 300 from a start position 302 to the destination 308. The driving route may be planned manually according to user inputs or automatically upon receipt of the user input of the destination 308. According to an embodiment of the present disclosure, the planned driving route may be a default route selected based on the use history of the navigation unit when the navigation unit powers on.

In this case, the navigation unit may generate a position list including positions 302, 303, 304, 305, 306, 307, and 308 which the terminal 300 may pass on the planned driving route. Next, the navigation unit may provide the terminal 300 with the position list comprised of the positions 302, 303, 304, 305, 306, 307, and 308.

In this case, the positions may correspond to global positioning system (GPS) information. The positions may be global navigation satellite system (GLONASS) information, Beidou navigation satellite system (Beidou) information, or Galileo information.

Next, the terminal 300 may transmit the position list associated with the driving route plan to a macro V2X server 310 at step 313.

If the position list is received, the macro V2X server 310 may determine, at step 315, provision information for connection to at least one location V2X server taking charge of the area to which the terminal 300 moves and for use of at least one local MBMS channel.

Here, the provision information for connection to the local V2X server 320 may include an IP address as identity information of the local V2X server 320. The provision information for connection to the local V2X server 320 may also include a base station name (eNB name) as the identity information of the base station to which the terminal 300 moves and an ECGI as the identify information of a cellular network of the base station to identify a local gateway for routing the connection to the local V2X server 320.

The macro V2X server 310 may transmit to the terminal 300, at step 317, a provision information list including the provision information for connection to the at least one V2X server 320 and the provision information for use of the at least one local MBMS channel.

Next, the terminal 300 may enter a new area on the planned driving route at step 319.

After entering the new area, the terminal 300 may request for a connection, at step 321, to the local V2X server 320 based on the provision information received at step 317.

If the V2X server 320 accepts the connection of the terminal 300 at step 323, the terminal 300 and the local V2X server 320 perform V2X communication at step 325.

For example, the terminal 300 may transmit a connection establishment request to a core network to establish a PDN network connection with the local gateway connected to the local V2X server 320, for connection with the local V2X server 320. If the PDN connection is established, the terminal 300 may perform V2X communication with the local V2X server 320 through the PDN. In this case, the terminal 300 may change the MBMS context in consideration of the characteristics of the new area.

In reference to FIG. 3b, the terminal 300 may request to the core network 335 for establishment of a PDN connection or modification of the previous PDN connection to connect to the local V2X server 320 or a local gateway. The core network 335 may establish a PDN connection to the local V2X server 320 or modify the previous PDN connection to be switched to the local V2X server 320 according to the request from the terminal 300. Afterward, the terminal 300 may transmit IP data to the local V2X server 320 through an application level signaling to request for establishing an IP connection between the local V2X server 320 and the terminal 300.

In more detail, the macro V2X server 310 and the terminal 300 may communicate at step 340.

When the terminal 300 is located at a predetermined position, it may determine at step 341 whether it is possible to establish a connection to a local gateway (or the local V2X server 320) currently based on the provision information received for use in connection to the local V2X server 320. Depending on the embodiment, the provision information may be the information received from the macro V2X server 310 at step 317 of FIG. 3a.

The base station 330 may broadcast the information indicating that the base station 330 is connected to the local V2X server 320 via a local gateway at step 343 such that the terminal 300 determines that it can connect to the local gateway via the base station 330 or the corresponding cell.

The terminal 300 may transmit to the core network 335 a PDN connection request or a PDN connection modification request message at step 345. In the case that the terminal 200 requests for a new PDN connection (the term "PDN connection" is intended to encompass all connections to a PDN and may be referred to as packet data unit (PDU) session) to the local gateway or local V2X server 320, the intention may be to open a new PDN connection to the local V2X server 320, while maintaining the connection to the macro V2X server 310, to communicate with the local V2X server 320. In the case where the terminal 300 wants to modify the previously established PDN connection to be switched to the local gateway or the local V2X server 320, it may transmit a PDN connection modification request message to the core network 335.

The terminal 300 may determine whether to transmit a PDN connection request message or a PDN connection modification message according to the characteristics of the V2X service in progress. For example, in the case that the terminal 300 communicates with the macro V2X server 310 and the local V2X server 320 simultaneously, it may distinguish between the data to be transmitted to the macro V2X server 310 and the data to be transmitted to the local V2X server 320, i.e., it transmits delay-sensitive or large-size data to the local V2X server 320 and relatively static and delay-tolerant data to the macro V2X server 320. At this time, the terminal 300 may request to the core network 335 for establishment of a PDN connection to the local V2X server.

Alternatively, if the terminal 300 does not distinguish between the macro and local V2X servers 310 and 320 in transmitting/receiving information related to the corresponding V2X service, it may communicate with the macro and local V2X servers 310 and 320 through one PDN connection rather than the two separate PDN connections (one to the macro V2X server 310 and the other to the local V2X server 320). In this case, the terminal 300 may request to the core network 335 for modifying PDN connectivity such that the PDN connection to the macro V2X server 310 is modified to be switched to the local V2X server 320. The terminal 300 may also transmit a PDN connection modification request to the core network 350 to modify the connection established to the local V2X server 320 at the previous location to be switched to another local V2X server available at the current location.

The PDN connection establishment request or PDN connection modification request transmitted by the terminal 300 may include at least one of an APN corresponding to the V2X service, current location of the terminal 300, local V2X server or local V2X gateway information (e.g., ID and/or IP address and/or other type of name identifying the local server/gateway). Depending on the embodiment, if the terminal 300 transmits the PDN connection modification request message, this message may include a PDN session ID for identifying the previous PDN connection.

The V2X APN may be an identifier for identifying the connection established for providing the terminal 300 with the V2X service through the 4G or 5G mobile communication network. That is, the V2X service and the mobile communication service may be configured with specific V2X APN values through SLA. The core network 335 checks the V2X APN included in the PDN connection establishment message or PDN connection modification message transmitted by the terminal 300 to determine whether the corresponding V2X APN is valid for the corresponding terminal 300 and whether to accept the request from the terminal 300. Depending on the embodiment, the V2X APN included the request message transmitted by the terminal 300 may be a value indicating the V2X server 310, a value determined in a location-specific manner for providing the terminal 300 with the V2X service, or a value included in the provision information received from the macro V2X server 310 for use in access to the local V2X server 320 or a local gateway.

The terminal may include the terminal's location information in the PDN connection establishment request message or PDN connection modification request message to be transmitted to the core network 345. The core network may determine whether the terminal 300 has the capability of connecting to a local V2X server or a local gateway at the current location. In the case where no location information is provided by the terminal 300, one of the network functions (e.g., MME function, access and mobility management function (AMF), and session management function (SMF)) of the core network 335 that are capable of locating the terminal 300 may make such determination.

The terminal 300 may also include the information indicating that it wants to connect to the local gateway or local V2X server 320 in the PDN connection establishment request message or PDN connection modification request message to be transmitted to the core network 335. This information may be an indicator for instructing to request for connection to the local gateway or local V2X server 320, a local gateway address or ID, or a local V2X server address or ID. Here, the term "address" is intended to mean an IP address and/or fully qualified domain name (FQD).

At step 347, the core network 335 may check the local gateway address (or ID) or the local V2X server address or ID to identify the corresponding local gateway or V2X server 320 and establish a PDN connection between the terminal 300 and the local gateway or local V2X server 320.

If it is determined to accept the PDN connection establishment request or PDN connection modification request of the terminal 300, the core network 335 may perform a PDN connection establishment procedure, at step 349, with the base station 330 to establish a PDN connection between the terminal 300 and the local gateway or the local V2X server 320. This procedure may be performed between the core network (e.g., MME, S-GW, or P-GW of a 4G system and SMF or user plane function (UPF) of a 5G system) and the base station 330 according to the PDN connection establishment or PDN connection modification procedure as specified in the 3GPP standard.

The terminal 300 may recognize the newly established PDN connection or the modification of the previous PDN connection and transmit V2X data to the local V2X server 320 via the local gateway at step 353.

The core network 335 may notify the macro V2X server 310 of the PDN connection establishment or modification between the terminal 300 and the V2X server 310 at step 351.

Afterward, the terminal 300 may transmit IP packets to the local V2X server 320 to establish an application-layer connection therebetween.

In the embodiment of FIG. 3a, it may be possible for the terminal 300 to transmit the PDN connection establishment or modification request message to a core network for connection to the local V2X server 320 or local gateway as described in the embodiment of FIG. 3b. In this case, the core network 335 may establish a PDN connection to the local V2X server 320 or modify the previously established PDN connection to be switched to the local V2X server 320. Next, the terminal 300 may transmit IP data to the local V2X server 320 through application level signaling to establish an IP connection between the local V2X server 320 and the terminal 300.

Meanwhile, if the terminal 300 moves out of the planned driving route, the navigation unit may update the planned driving route and provide the terminal 300 with a newly planned driving route. In this case, the terminal 300 may transmit a position list associated with the changed planned driving route to the macro V2X server 310. In reply, the terminal 300 may receive provision information for connection to at least one local V2X server taking charge of a local area on the newly planned driving route from the macro V2X server 310. Afterward, if the terminal 300 enters the changed local area, the terminal 300 may perform V2X communication with the local V2X server 320 taking charge of the corresponding local area based on the received provision information.

According to various embodiments, the navigation unit and the V2X service are managed by an MNO and the navigation unit may have an ECGI list and/or a tracking area ID list as the position list associated with the planned driving route. In this case, the terminal 300 may transmit to the macro V2X server 310 the ECGI or tracking area identifier (TAI) list instead of GPS information and, in reply, the macro V2X server 310 may transmit to the terminal 300 the provision information for connection to the local V2X server 320 taking charge of the corresponding local area and access to the local MBMS service channel, the provision information being generated based on the ECGI or TAI list.

According to an embodiment, the macro V2X server 310 may transmit to the core network 335 the mobility information of the terminal 300. The mobility information may include geographical position information as denoted by reference number 301. For example, the geographical position information may include a list of positions 302, 303, 304, 305, 306, 307, and 308 on the driving route. The positions 302, 303, 304, 305, 306, 307, and 308 may be expressed by GPS coordinates, cell IDs, TAIs, civic addresses, or postal/zip codes. According to an embodiment, the geographical positions 302, 303, 304, 305, 306, 307, and 308 are neither cell IDs nor TAIs, the core network 335 may map the geographical positions to corresponding cell IDs or TAIs. The geographical position information may include IDs of local gateways available in the local areas identified by the position information, and the core network 335 may determine a local gateway for connecting the terminal 300 to the local V2X server at a certain location based on the local gateway IDs. The core network 335 may be a 4G communication system, a post 4G communication system, or a 5G communication system.

The core network may determine whether the base station taking charge of the local area through which the terminal 300 travels supports connection to the local V2X server 320 based on the mobility information of the terminal 300. This may be achieved in such a way that the base station 330 notifies the core network 335 of the base station's capability of local gateway or local V2X server connection during the connection establishment procedure with the core network 335. If the core network 335 acquires the cell ID or TAI of the base station 330 selected for serving the terminal 300 through a mobility procedure, it may check the mobility information of the corresponding terminal 300 and determine whether the corresponding base station 330 is connected to the local V2X server 320 or the local gateway.

Afterward, the core network 335 may detect that the terminal 300 has moved to a local area in which the base station 330 capable of connecting the terminal 300 to the local V2X server 320 is located. In this case, the core network 335 may control to establish a connection between the terminal 300 and the local V2X server 320. For example, the core network 335 may control such that a new PDN connection is established between the terminal 300 and the local V2X server 320 based on the provision information. The core network 335 may also control such that the previously established PDN connection of the terminal 300 is modified to be switched to the local V2X server 32.

That is, the core network 335 may notice that the terminal 300 enters the local area or a service area of the base station 330 in which connection to the local V2X server 320 is available, based on the mobility information of the terminal 300 rather than in response to request from the terminal 300, and establish a PDN connection between the terminal and the local V2X server 320. The core network 335 may also notice that the terminal 300 enters the local area or a service area of the base station 330 in which connection to the local V2X server 320 is available, based on the mobility information of the terminal 300, and perform a PDN connection modification procedure to switch the previously established PDN connection of the terminal 300 to the local V2X server 320.

In reference to FIG. 4, a terminal 400 may communicate with a local V2X server based on the terminal's current location.

The terminal 400 on the move may acquire the terminal's location information by means of a location sensing module at step 411, the location information being provided as denoted by reference number 401. The location sensing module may be a GPS module, a GLONASS module, a Beidou module, or a Galileo module. According to an embodiment, the location sensing module may be installed in the terminal 400 or an external device separated from the terminal 400 so as to transmit geographical location information to the terminal 400.

At step 411, the terminal 400 may also acquire driving information of the vehicle on which the terminal 400 is mounted.

For example, a navigation unit may collect the driving information of the vehicle on which the terminal 400 is mounted such as a travel speed as denoted by reference number 403, a name of the road on which the vehicle is traveling as denoted by reference number 402, and type of the road (e.g., expressway, arterial road, and national highway) by means of a location sensing module and provide the collected driving information to the terminal 400. The terminal 400 may also collect the information on the type of the vehicle as part of the driving information of the vehicle. The types of vehicle may include ambulance, bus, car, motor cycle, bicycle, ship, and airplane.

Next, the terminal 400 may transmit to the macro V2X server 410 the current location information and driving information of the vehicle at step 413.

At step 415, the macro V2X server 410 may predict a local area to which the terminal 400 is likely to move from the current location and manage the predicted local area as a candidate next-hop area based on the current location information of the terminal 400 and the driving information of the vehicle.

The macro V2X server 410 may consider the type of the vehicle. For example, if the vehicle is an ambulance, it may use a semi-static driving route. Meanwhile, a bus may use a static driving route, and a bicycle may use a road of exclusive use of bicycles. The macro V2X server may predict the candidate next-hop areas more precisely based on the type of the road for use by the vehicle.

An emergency vehicle such as an ambulance may use the V2X service with priority in comparison with normal vehicles. Accordingly, the macro V2X server 410 may differentiate the emergency vehicles from the normal vehicles in accessing to the local V2X server and MBMS channel.

Alternatively, the macro V2X server 410 may consider the traveling speed of the vehicle. The macro V2X server 410 may predict that a slowly traveling vehicle has a small scope of candidate next-hop areas while a fast traveling vehicle has a large scope of candidate next-hop areas.

Alternatively, the macro V2X server 410 may predict a candidate next-hop area to which the vehicle is likely to move based on the type of the road on which the vehicle is traveling. For example, if the vehicle is traveling on an expressway, the macro V2X server 410 may predict a candidate next-hop area to which the vehicle is likely to move based on the traveling direction on the expressway.

Alternatively, the macro V2X server 410 may predict a candidate next-hop area to which the vehicle is likely to move based on the travel history of the vehicle. In this case, the travel history of the vehicle may be transmitted from the vehicle to the macro V2X server 410 and stored in a memory of the macro V2X server 410.

Although description is directed the case where the macro V2X server 410 determines the candidate next-hop area to which the terminal 400 is likely to move based on the current location information and driving information of the vehicle, the candidate next-hop area determination may be made by the terminal 400 or a separate device mounting the vehicle according to various embodiments of the present disclosure. In this case, the terminal 400 or the separate device mounting the vehicle may transmit a list of candidate next-hop areas to which the terminal 400 is likely to move to the macro V2X server 410.

If the candidate next-hop areas to which the terminal 400 is likely to move from the current location of the terminal have been determined, the macro V2X server 410 may generate, at step 417, a provision information list including the provision information for connection to at least one local V2X server 420 taking charge of the at least one candidate next-hop area and the provision information for use of the at least one local MBMS channel.

Next, the macro V2X server 410 may transmit the provision information list to the terminal 400 at step 419.

Afterward, the terminal 400 may enter a candidate next-hop area at step 421.

After entering the candidate next-hop area, the terminal 400 may request to the local V2X server 420 for establishment to the connection thereto, at step 423, based on the provision information received at step 419. The connection between a terminal and a local V2X server is established as described in step 321 of FIG. 3; thus, a detailed description thereof is omitted herein.

If the local V2X server 420 accepts the connection establishment request at step 425, the terminal 400 may perform V2X communication with the local V2X server at step 427.

Meanwhile, the terminal 400 may request to the core network (not shown) for PDN connection establishment or PDN connection modification for connection to the local V2X 420 or the local gateway, before step 423, as described in the embodiment of FIG. 3b. In this case, the core network may establish a PDN connection to the local V2X server 420 or modify the previously established PDN connection to be switched to the local V2X server 420. Afterward, the terminal 400 may transmit IP data to the local V2X server 420 through application level signaling to request for IP connection between the local V2X server 420 and the terminal 400. Detailed descriptions thereof have been made above and thus are omitted herein.

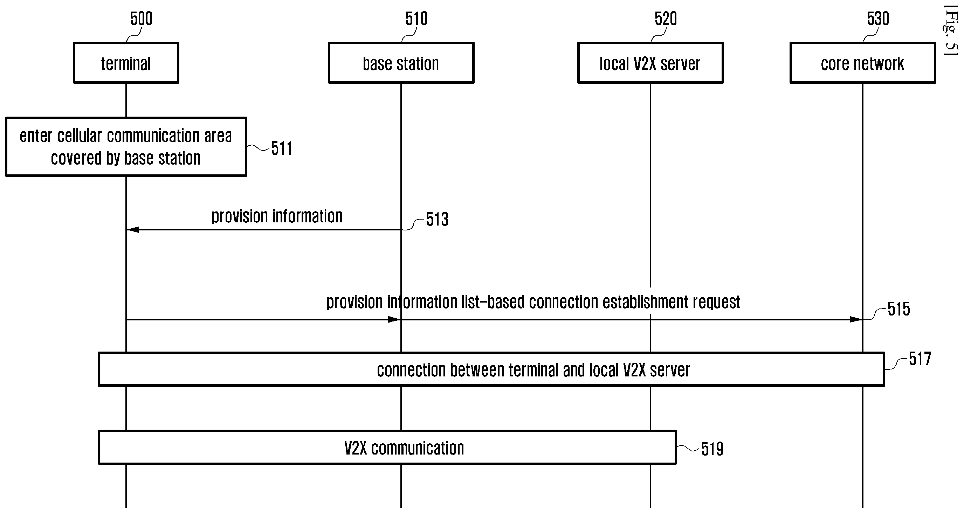

In reference to FIG. 5, a terminal 500 may communicate with a V2X server 520 based on information received from a base station 510.

The terminal 500 may enter a cellular communication area (e.g., cell) covered by the base station 510 at step 511.

The base station 500, as an access node for cellular communication within the area where the terminal 500 is located, may transmit to the terminal 500 the provision information for connection to the local V2X server 520 taking charge of the corresponding area at step 513.

For example, the base station may broadcast a system information (SI) message including the provision information for connection to the local server 520 and the provision information for use of an MBMS channel. Accordingly, the terminal 500 may acquire the provision information from the SI message.

In the case that the terminal 500 attempts to connect to the base station 510 through a radio access procedure (e.g., random access channel (RACH) procedure) as specified in the 3GPP standard, the base station 510 may transmit to the terminal 500 a radio resource control (RRC) message. In this case, the terminal 500 may acquire the provision information from the RRC message.

Next, the terminal 500 may request to the base station 510, at step 515, for establishing a connection to the local V2X server 520 taking charge of the area within the terminal is located based on the received provision information. That is, the terminal 500 may request to the core network 530 to establish a connection to the local V2X server 520 via the base station 510. The core network 530 may establish a connection for data communication between the terminal 500 and the local V2X server 520.

After a connection is established between the local V2X server and the terminal 500 at step 517, the terminal 500 may perform V2X communication with the local V2X server 520 through the connection link at step 519.

According to various embodiments, if a system information block (SIB) constituting the SI message includes an IP address of the local gateway which is directly connected to the local V2X server 520, the terminal 500 may request for connection to the IP address of the local gateway.

Alternatively, if the SIB includes a name of the local gateway which is directly connected to the local V2X server 520, the terminal 500 may determine whether the name of the local gateway is associated with the V2X service. If it is determined that the name of the gateway is associated with the V2X service, the terminal 500 may request to the core network 530 for connection to the local V2X server 520 based on the name of the local gateway. Accordingly, the base station 510 may establish a connection for communication with the local gateway co-located with the local V2X server in the same coverage.

Alternatively, if the SIB includes an IP address or a fully qualified domain name (FQDN) of the local V2X server 520, the terminal 500 may request for connection to the IP address of the local V2X server or an IP address acquired with a domain name server query using the FQDN. The core network 530 may inspect the IP packets transmitted by the terminal 500 and, if there is any packet addressed to the IP address of the local V2X server 520 (or derived from the FQDN), switch the data path to the local V2X server 520. This procedure is similar to that in the embodiment of FIG. 3b and thus detailed description thereof is omitted herein.

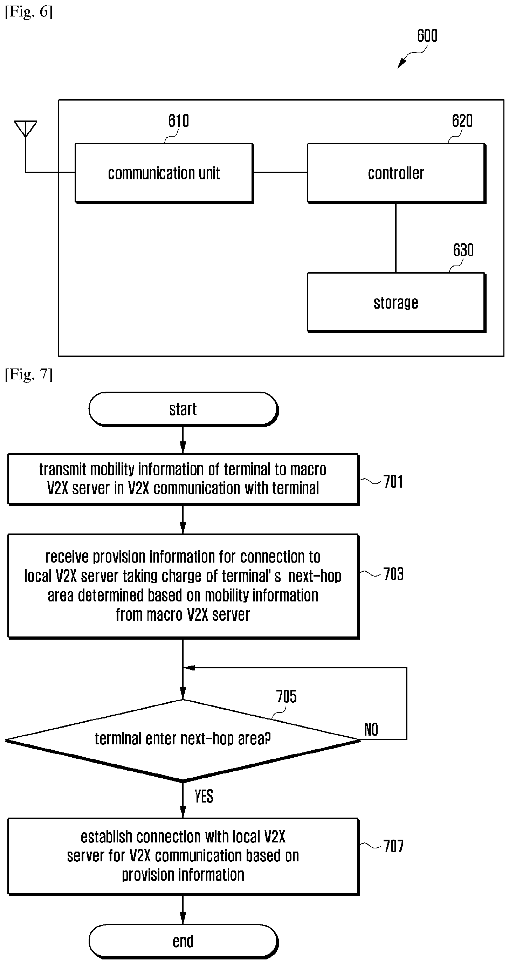

FIG. 6 illustrates a configuration of a network entity according to an embodiment of the present disclosure.

In the embodiment FIG. 6, the network entity 600 may include a communication unit (or transceiver) 610, a controller (or processor) 20, and a storage (or memory) 630. The network entity may be a terminal.

The terminal 600 may be equivalent to the terminals 100, 200, 300, 400, and 500 depicted in FIGs. 1 to 5.

In the following description,'∼ unit,' '∼ device,' or '∼ module' carries out at least one function or operation and may be implemented in hardware or software or as a combination of hardware and software.

The communication unit 610 carries out a function of transmitting/receiving signals through a radio channel. The communication unit 610 may include a transceiver for transmitting and receiving signals. The communication unit 610 may take charge receiving a radio frequency (RF) signal and performing, on the received signal, frequency conversion, demodulation, decoding, cyclic prefix (CP) removal, and fast Fourier transform (FFT), channel estimation, and equalization. The communication unit 610 may carry out a function of transferring the signal processed by the controller 620 to another node.

The transceiver of the communication unit 610 may transmit and receive a signal to and from a network entity such as a base station, a V2X server, a gateway, and another terminal.

The controller 620 may control the overall operations of the terminal 600. For example, the controller 620 may control the communication unit 610 to receive a signal. The controller 620 may also write and read data to and from the storage 630. For this purpose, the controller 620 may include or be a part of at least one processor, microprocessor, or microcontroller.

According to an embodiment, the controller 620 may transmit mobility information of the terminal 600 to a macro V2X server through V2X communication by means of the communication unit 610.

In the case, the mobility information of the terminal 600 may include a position list associated with a driving route plan of the terminal 600. The position list may include at least one of a GPS information list, an ECGI list, and a TAI list.

The mobility information of the terminal 600 may also include current location of the terminal 600 and driving information of a vehicle on which the terminal 600 is mounted. The driving information of the vehicle on which the terminal 600 is mounted may include at least one of a traveling speed of the vehicle, a name and a type of the road on which the vehicle is traveling, and a type of the vehicle.

The controller 620 may control the communication unit 610 to receive provision information for connection to a local V2X server taking charge of an area to which the terminal 600 is likely to move from a macro V2X server, the area being determined based on the mobility information, and store the provision information in the storage 630.

The controller 620 may control the communication unit 610 to receive provision information for use of a local MBMS channel determined based on the mobility information from the macro V2X server and store the provision information in the storage 630.

In this case, the provision information for connection to the local V2X server may include at least one of an identifier of the local V2X server and an identifier of a local gateway connected to the local V2X server.

If the terminal 600 enters the next-hop area, the controller 620 controls the communication unit 610 to establish a connection to the local V2X server for V2X communication based on the provision information stored in the storage 630.

In this case, the controller 620 may control the communication unit 610 to perform V2X communication with the local V2X server through the MBMS channel.

The controller 620 may also control the communication unit 610 to establish a connection to the local V2X server via a base station as an access node of the candidate next-hop area and a gateway connected to the local V2X server for V2X communication.

The storage 630 may store basic programs for operating the terminal 600, application programs, and settings. For example, the storage 630 may store data processed by the controller 620. The storage 630 may be implemented with a volatile memory or a non-volatile memory or as a combination of the volatile and non-volatile memories. For example, the storage 630 may be implemented with a random-access memory (RAM) or a flash memory.

The storage 630 may store a position list associated with the driving route plan of the terminal 600. The storage 630 may store the location information of the terminal 600 and the driving information of the vehicle on which the terminal 600 is mounted.

The storage 630 may store the provision information for connection to the local V2X server taking charge of the next-hop area to which the terminal is likely to move, the provision information being received from the macro V2X server or the base station. The storage 630 may store the provision information for use of a local MBMS channel determined based on the mobility information, the provision information being received from the macro V2X server or the base station.

The network entity 600 may be one of base station, macro V2X server, local V2X server, and core network functions. For examples, if the network entity 600 is a local V2X server, the controller 620 may control the overall operations of the local V2X server to accomplish the operation of one of the above described embodiments. The communication unit 610 may control the local V2X server to communicate signals with other network entities.

FIG. 7 illustrates a flow chart of a communication procedure of a terminal according to an embodiment of the present disclosure.

The terminal may transmit the terminal's mobility information to a macro V2X server is performing V2X communication with the terminal at step 701.

In this case, the mobility information may include a position list associated with a driving route plan of the terminal. The position list may include at least one of a GPS information list, an ECGI list, and a TAI list.

Alternatively, the mobility information may include location information of the terminal and driving information of a vehicle on which the terminal is mounted. The driving information of the vehicle may include at least one of a traveling speed of the vehicle, a name and a type of the road on which the vehicle is traveling, and a type of the vehicle.

At step 703, the terminal may receive provision information for connection to a local V2X server taking charge of a next-hop area of the terminal, the provision information being generated based on the mobility information.

In this case, the provision information for connection to the local V2X server may include at least one of an identifier of the local V2X server and an identifier of a local gateway connected to the local V2X server.

According to an embodiment, if the terminal is performing V2X communication with a local V2X server through a MBMS channel, the terminal may further receive the provision information for use of the MBMS channel from the macro V2X server, the provision information being generated based on the mobility information.

Next, the terminal may determine at step 705 whether the terminal has entered the next-hop area predicted based on the mobility information.

If it is determined at step 705 that the terminal has entered the next-hop area, the terminal may establish a connection with the local V2X server for V2X communication, at step 707, based on the provision information received from the macro V2X server. For this purpose, the terminal may request to a core network for establishing a connection with the local V2X server.

In this case, the terminal may establish the connection with the local V2X server via a base station as an access node of the next-hop area and a gateway connected to the local V2X server.

According to various embodiments, the terminal may perform V2X communication with the local V2X server through an MBMS channel. If the terminal uses the MBMS channel, the terminal may further receive provision information for use of the local MBMS channel determined based on the mobility information, the provision information being received from the macro V2X server.

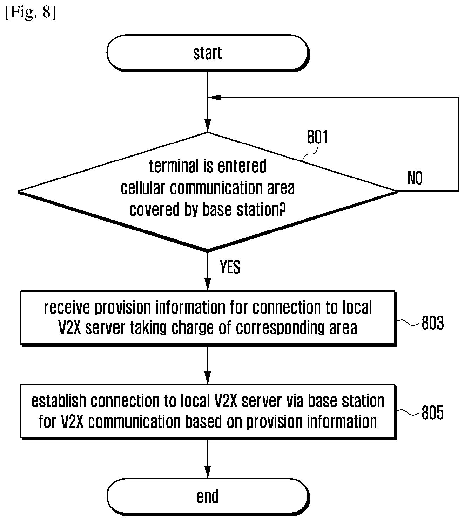

FIG. 8 illustrates another flow chart of a communication procedure of a terminal according to another embodiment of the present disclosure.

The terminal may determine at step 801 whether the terminal has entered a cellular communication area covered by a base station.

If it is determined that the terminal has entered to a cellular communication area, the terminal may receive provision information for connection to a local V2X server taking charge of the area from the base station at step 803.

In this case, the provision information for connection to the local V2X server may include at least one of an identifier of the local V2X server and an identifier of a local gateway connected to the local V2X server.

Depending on the embodiment, if the terminal is performing V2X communication with the local V2X server through an MBMS channel, the terminal may further receive provision information for use of a local MBMS channel determined based on the mobility information, the provision information being received from the base station.

Next, the terminal may establish an IP connection with the local V2X server, at step 805, for V2X communication based on the provision information received from the base station with the assistance of the core network.

In this case, the terminal may establish a connection with the local V2X server via a base station as an access node of the next-hop area and a gateway connected to the local V2X server for V2X communication.

According to various embodiments, the terminal may perform the V2X communication with the local V2X server through an MBMS channel. In the case of using the MBMS channel, the terminal may further receive provision information for use of the local MBMS channel determined based on the mobility information, the provision information being received from the base station.

As described above, the present disclosure is advantageous in terms of facilitating establishment of a connection to a local V2X server based on the connection provision information for connection to a local V2X server, the connection provision information being received in advance from a macro V2X server. This makes it possible to reduce the delay required for a terminal entering a local area to start V2X communication with the local V2X server.

Specific aspects of the present disclosure may also be implemented as a computer-readable code in a computer-readable recording medium. The computer-readable recording medium may be any data storage device that can store the data that can be read by the computer system. Examples of the computer-readable recording medium may include read only memories (ROMs), random access memories (RAMs), compact disk-read only memories (CD-ROMs), magnetic tapes, floppy disks, optical data storage devices, and carrier waves (such as data transmission over the Internet). The computer-readable recording medium may be distributed over the computer systems connected to the network, so the computer-readable code may be stored and executed in a distributed manner. Further, the functional programs, codes, and code segments for achieving the present disclosure may be easily construed by the programmers skilled in the field to which the present disclosure is applied.

The method according to an embodiment of the present disclosure may be implemented by the computer or the mobile terminal, which includes a computer or a memory, and it will be appreciated that the memory is an example of the machine-readable storage medium suitable to store a program or programs including instructions implementing embodiments of the present disclosure.

Therefore, the present disclosure may include a program including a code for implementing the apparatus and method as set forth in any claim of the specification, and a machine (or computer)-readable storage medium storing the program. Further, the program may be electrically transferred through any media such as the communication signals transmitted through wired/wireless connections, and the present disclosure may appropriately include equivalents thereto.

Further, the apparatus according to an embodiment of the present disclosure may receive the program from a program server (or a program providing device) that is connected to the apparatus by wires or wirelessly, and store the received program. The program server may include a memory for storing a program including instructions for allowing the program server to perform the V2X communication method, and storing the information required for the V2X communication method, a communication unit for performing wired/wireless communication with the apparatus, and a controller for transmitting the program to a transceiver automatically or at the request of the apparatus.

Although the description has been made with reference to particular embodiments, the present disclosure can be implemented with various modifications without departing from the scope of the present disclosure. Thus, the present disclosure is not limited to the particular embodiments disclosed. The invention is defined by the claims.

Although the present disclosure has been described with an exemplary embodiment, various changes and modifications may be suggested to one skilled in the art. It is intended that the present disclosure encompass such changes and modifications as long as they fall within the scope of the appended claims.

## Claims

1. A communication method of a terminal (100, 600), the method comprising:
transmitting, to a macro vehicle-to-everything, V2X, server (110) performing a V2X communication with the terminal (100, 600), mobility information of the terminal (100, 600);
receiving, from the macro V2X server (110), provision information associated with a connection to a local V2X server (112, 113) controlling an area predicted as a next-hop area to which the terminal (600) moves, the provision information being generated based on the mobility information; and
establishing, when the terminal (600) enters the next-hop area, the connection to the local V2X server (112, 113) for the V2X communication based on the provision information.

2. The method of claim 1, wherein the provision information associated with the connection to the local V2X server (112, 113) comprises at least one of an identifier of the local V2X server (112, 113) or an identifier of a local gateway (122, 123) to which the local V2X server (112, 113) is connected.

3. The method of claim 1, wherein the mobility information comprises at least one of a position list associated with a driving route plan of the terminal (100, 600), a current location of the terminal (600), or driving information of a vehicle (100) on which the terminal (600) is mounted.

4. The method of claim 3, wherein the position list comprises at least one of a global positioning system, GPS, information list, an evolved universal terrestrial radio access network, E-UTRAN, cell global identifier, ECGI, list, or a tracking area identifier, TAI, list, and wherein the driving information comprises at least one of a traveling speed of the vehicle (100), a name and a type of a road on which the vehicle (100) travels, or a type of the vehicle (100).

5. The method of claim 1, wherein establishing the connection to the local V2X server (112, 113) comprises performing the V2X communication with the local V2X server (112, 113) through a multimedia broadcast multicast service, MBMS, channel, and wherein receiving the provision information comprises receiving the provision information for a use of the MBMS channel determined based on the mobility information from the macro V2X server (110).

6. The method of claim 1, wherein the connection to the local V2X server (112, 113) is established via a base station (132, 133) as an access node of the next-hop area and a gateway (122, 123) connected to the local V2X server (112, 113).

7. A terminal (100, 600), comprising:
a storage (630) configured to store information;
a transceiver (610) configured to transmit and/or receive signals to and from other network entities; and
a controller (620) configured to control the terminal (100, 600) to:
transmit, via the transceiver (610), to a macro vehicle-to-everything, V2X, server (110) performing a V2X communication with the terminal (100, 600), mobility information of the terminal (100, 600);
receive, via the transceiver (610), from the macro V2X server (110), provision information associated with a connection to a local V2X server (112, 113) controlling an area predicted as a next-hop area to which the terminal (100, 600) moves, the provision information being generated based on the mobility information;
store the provision information in the storage (630); and
establish, when the terminal (600) enters the next-hop area, the connection to the local V2X server (112, 113) for the V2X communication based on the provision information.

8. The terminal (100, 600) of claim 7, wherein the provision information associated with the connection to the local V2X server (112, 113) comprises at least one of an identifier of the local V2X server (112, 113) or an identifier of a local gateway (122, 123) to which the local V2X server (112, 113) is connected.

9. The terminal (100, 600) of claim 7, wherein the mobility information comprises at least one of a position list associated with a driving route plan of the terminal (100, 600), a current location of the terminal (100, 600), or driving information of a vehicle (100) on which the terminal (600) is mounted.

10. The terminal (100, 600) of claim 9, wherein the position list comprises at least one of a global positioning system, GPS, information list, an evolved universal terrestrial radio access network, E-UTRAN, cell global identifier, ECGI, list, or a tracking area identifier, TAI, list, and wherein the driving information comprises at least one of a traveling speed of the vehicle (100), a name and a type of a road on which the vehicle (100) travels, or a type of the vehicle (100).

11. The terminal (100, 600) of claim 7, wherein the controller (620) is further configured to control the terminal (100, 600) to:
perform the V2X communication with the local V2X server (112, 113) through a multimedia broadcast multicast service, MBMS, channel; and
receive, via the transceiver (610), the provision information for a use of the MBMS channel determined based on the mobility information from the macro V2X server (110).

12. The terminal (100, 600) of claim 7, wherein the controller (620) is further configured to control the terminal (600) to establish, via a base station (132, 133), the connection to the local V2X server (112, 113) using the transceiver (610) as an access node of the next-hop area and a gateway (122, 123) connected to the local V2X server (112, 113).

## Patentansprüche

1. Kommunikationsverfahren eines Endgeräts (100, 600), wobei das Verfahren Folgendes umfasst:
Übertragen, an einen Makro-Fahrzeug-zu-alles-Server, Vehicle-to-Everything - V2X-Server (110), der eine V2X-Kommunikation mit dem Endgerät (100, 600) durchführt, von Mobilitätsinformationen des Endgeräts (100, 600);
Empfangen, von dem Makro-V2X-Server (110), von Bereitstellungsinformationen, die einer Verbindung mit einem lokalen V2X-Server (112, 113) zugeordnet sind, der einen Bereich steuert, der als ein Next-Hop-Bereich vorhergesagt ist, zu dem sich das Endgerät (600) bewegt, wobei die Bereitstellungsinformationen basierend auf den Mobilitätsinformationen generiert werden; und
Herstellen, wenn das Endgerät (600) in den Next-Hop-Bereich eintritt, der Verbindung mit dem lokalen V2X-Server (112, 113) für die V2X-Kommunikation basierend auf den Bereitstellungsinformationen.

2. Verfahren nach Anspruch 1, wobei die Bereitstellungsinformationen, die der Verbindung mit dem lokalen V2X-Server (112, 113) zugeordnet sind, mindestens eine aus einer Kennung des lokalen V2X-Servers (112, 113) oder einer Kennung eines lokalen Gateways (122, 123), mit dem der lokale V2X-Server (112, 113) verbunden ist, umfassen.

3. Verfahren nach Anspruch 1, wobei die Mobilitätsinformationen mindestens eine aus einer Positionsliste, die einem Fahrstreckenplan des Endgeräts (100, 600) zugeordnet ist, einer aktuellen Position des Endgeräts (600) oder Fahrinformationen eines Fahrzeugs (100), an dem das Endgerät (600) angebracht ist, umfassen.

4. Verfahren nach Anspruch 3, wobei die Positionsliste mindestens eine aus einer Liste von Informationen eines globalen Ortungssystems, Global Positioning System - GPS, einer Liste eines Evolved Universal Terrestrial Radio Access Network, E-UTRAN, Cell Global Identifier, ECGI, oder einer Liste einer Verfolgungsbereichserkennung, Tracking Area Identifier - TAI, umfasst, und wobei die Fahrinformationen mindestens eines aus einer Bewegungsgeschwindigkeit des Fahrzeugs (100), einem Namen und einer Art einer Straße, auf der sich das Fahrzeug (100) bewegt, oder einem Fahrzeugtyp (100) umfassen.

5. Verfahren nach Anspruch 1, wobei Herstellen der Verbindung mit dem lokalen V2X-Server (112, 113) Durchführen der V2X-Kommunikation mit dem lokalen V2X-Server (112, 113) über einen Multimedia-Broadcast-Multicast-Service, MBMS, Kanal umfasst, und wobei Empfangen der Bereitstellungsinformationen Empfangen der Bereitstellungsinformationen für eine Verwendung des MBMS-Kanals, die basierend auf den Mobilitätsinformationen von dem Makro-V2X-Server (110) bestimmt wird, umfasst.

6. Verfahren nach Anspruch 1, wobei die Verbindung mit dem lokalen V2X-Server (112, 113) über eine Basisstation (132, 133) als einen Zugangsknoten des Next-Hop-Bereichs und einen Gateway (122, 123), der mit dem lokalen V2X-Server (112, 113) verbunden ist, hergestellt wird.

7. Endgerät (100, 600), umfassend:
einen Speicher (630), der dafür ausgelegt ist, Informationen zu speichern;
einen Sendeempfänger (610), der dafür ausgelegt ist, Signale an andere Netzwerkentitäten zu senden und/oder von diesen zu empfangen; und
eine Steuereinrichtung (620), die dafür ausgelegt ist, das Endgerät (100, 600) zu steuern für:
Übertragen, über den Sendeempfänger (610), an einen Makro-Fahrzeug-zu-alles-Server, Vehicle-to-Everything - V2X-Server, der eine V2X-Kommunikation mit dem Endgerät (100, 600) durchführt, von Mobilitätsinformationen des Endgeräts (100, 600);
Empfangen, über den Sendeempfänger (610), von dem Makro-V2X-Server (110), von Bereitstellungsinformationen, die einer Verbindung mit einem lokalen V2X-Server (112, 113) zugeordnet sind, der einen Bereich steuert, der als ein Next-Hop-Bereich vorhergesagt ist, zu dem sich das Endgerät (100, 600) bewegt, wobei die Bereitstellungsinformationen basierend auf den Mobilitätsinformationen generiert werden;
Speichern der Bereitstellungsinformationen in dem Speicher (630); und
Herstellen, wenn das Endgerät (600) in den Next-Hop-Bereich eintritt, der Verbindung mit dem lokalen V2X-Server (112, 113) für die V2X-Kommunikation basierend auf den Bereitstellungsinformationen.

8. Endgerät (100, 600) nach Anspruch 7, wobei die Bereitstellungsinformationen, die der Verbindung mit dem lokalen V2X-Server (112, 113) zugeordnet sind, mindestens eine aus einer Kennung des lokalen V2X-Servers (112, 113) oder einer Kennung eines lokalen Gateways (122, 123), mit dem der lokale V2X-Server (112, 113) verbunden ist, umfassen.

9. Endgerät (100, 600) nach Anspruch 7, wobei die Mobilitätsinformationen mindestens eine aus einer Positionsliste, die einem Fahrstreckenplan des Endgeräts (100, 600) zugeordnet ist, einer aktuellen Position des Endgeräts (100, 600) oder Fahrinformationen eines Fahrzeugs (100), an dem das Endgerät (600) angebracht ist, umfassen.

10. Endgerät (100, 600) nach Anspruch 9, wobei die Positionsliste mindestens eine aus einer Liste von Informationen eines globalen Ortungssystems, Global Positioning System - GPS, einer Liste eines Evolved Universal Terrestrial Radio Access Network, E-UTRAN, Cell Global Identifier, ECGI, oder einer Liste einer Verfolgungsbereichserkennung, Tracking Area Identifier - TAI, umfasst, und
wobei die Fahrinformationen mindestens eines aus einer Bewegungsgeschwindigkeit des Fahrzeugs (100), einem Namen und einer Art einer Straße, auf der sich das Fahrzeug (100) bewegt, oder einem Fahrzeugtyp (100) umfassen.

11. Endgerät (100, 600) nach Anspruch 7, wobei die Steuereinrichtung (620) ferner dafür ausgelegt ist, das Endgerät (100, 600) für Folgendes zu steuern:
Durchführen der V2X-Kommunikation mit dem lokalen V2X-Server (112, 113) über einen Multimedia-Broadcast-Multicast-Service, MBMS, Kanal; und
Empfangen, über den Sendeempfänger (610), der Bereitstellungsinformationen für eine Verwendung des MBMS-Kanals, die basierend auf den Mobilitätsinformationen von dem Makro-V2X-Server (110) bestimmt wird.

12. Endgerät (100, 600) nach Anspruch 7, wobei die Steuereinrichtung (620) ferner dafür ausgelegt ist, das Endgerät (600) zu steuern, über eine Basisstation (132, 133) die Verbindung mit dem lokalen V2X-Server (112, 113) unter Verwendung des Sendeempfängers (610) als einen Zugangsknoten des Next-Hop-Bereichs und eines Gateways (122, 123), der mit dem lokalen V2X-Server (112, 113) verbunden ist, herzustellen.

## Revendications

1. Procédé de communication d'un terminal (100, 600), ledit procédé comprenant :
la transmission d'informations de mobilité du terminal (100, 600) à un serveur véhicule à tout V2X macro (110) effectuant une communication V2X avec le terminal (100, 600) ;
la réception du serveur V2X macro (110) d'informations de fourniture associées à une connexion à un serveur V2X local (112, 113) commandant une zone prédite en tant que zone de saut suivant vers laquelle le terminal (600) se déplace, les informations de fourniture étant générées sur la base des informations de mobilité ; et
l'établissement, quand le terminal (600) pénètre dans la zone de saut suivant, de la connexion au serveur V2X local (112, 113) pour la communication V2X sur la base des informations de fourniture.

2. Procédé selon la revendication 1, où les informations de fourniture associées à la connexion au serveur V2X local (112, 113) comprennent au moins un d'un identifiant du serveur V2X local (112, 113) ou un identifiant d'une passerelle locale (122, 123) à laquelle le serveur V2X local (112, 113) est connecté.

3. Procédé selon la revendication 1, où les informations de mobilité comprennent au moins une d'une liste de positions associée à un plan d'itinéraire du terminal (100, 600) ou une localisation actuelle du terminal (600) ou des informations de conduite d'un véhicule (100) à bord duquel le terminal (600) est monté.

4. Procédé selon la revendication 3, où la liste de positions comprend au moins une d'une liste d'informations de système de positionnement mondial GPS ou une liste d'identificateurs globaux cellulaires ECGI de réseau d'accès radio terrestre universel évolué E-UTRAN ou une liste d'identificateurs de zone de suivi TAI, et où les informations de conduite comprennent au moins un d'une vitesse de déplacement du véhicule (100) ou un nom et un type de chaussée sur laquelle le véhicule (100) se déplace ou un type de véhicule (100).

5. Procédé selon la revendication 1, où l'établissement de la connexion au serveur V2X local (112, 113) comprend l'exécution de la communication V2X avec le serveur V2X local (112, 113) via un canal de service de diffusion/multidiffusion multimédia MBMS, et où la réception des informations de fourniture comprend la réception des informations de fourniture pour une utilisation du canal MBMS déterminée sur la base des informations de mobilité reçues du serveur V2X macro (110).

6. Procédé selon la revendication 1, où la connexion au serveur V2X local (112, 113) est établie via une station de base (132, 133) en tant que nœud d'accès de la zone de saut suivant et une passerelle (122, 123) connectée au serveur V2X local (112, 113).

7. Terminal (100, 600), comprenant :
une mémoire (630) prévue pour stocker des informations ;
un émetteur-récepteur (610) prévu pour émettre des signaux vers d'autres entités de réseau et/ou en recevoir de celles-ci ; et
un contrôleur (620) prévu pour commander le terminal (100, 600) pour :
transmettre via l'émetteur-récepteur (610) des informations de mobilité du terminal (100, 600) à un serveur véhicule à tout V2X macro (110) effectuant une communication V2X avec le terminal (100, 600) ;
recevoir du serveur V2X macro (110) via l'émetteur-récepteur (610), des informations de fourniture associées à une connexion à un serveur V2X local (112, 113) commandant une zone prédite en tant que zone de saut suivant vers laquelle le terminal (100, 600) se déplace, les informations de fourniture étant générées sur la base des informations de mobilité ;
stocker les informations de fourniture dans la mémoire (630) ; et
établir, quand le terminal (600) pénètre dans la zone de saut suivant, la connexion au serveur V2X local (112, 113) pour la communication V2X sur la base des informations de fourniture.

8. Terminal (100, 600) selon la revendication 7, où les informations de fourniture associées à la connexion au serveur V2X local (112, 113) comprennent au moins un d'un identifiant du serveur V2X local (112, 113) ou un identifiant d'une passerelle locale (122, 123) à laquelle le serveur V2X local (112, 113) est connecté.

9. Terminal (100, 600) selon la revendication 7, où les informations de mobilité comprennent au moins une d'une liste de positions associée à un plan d'itinéraire du terminal (100, 600) ou une localisation actuelle du terminal (100, 600) ou des informations de conduite d'un véhicule (100) à bord duquel le terminal (600) est monté.

10. Terminal (100, 600) selon la revendication 9, où la liste de positions comprend au moins une d'une liste d'informations de système de positionnement mondial GPS ou une liste d'identificateurs globaux cellulaires ECGI de réseau d'accès radio terrestre universel évolué E-UTRAN ou une liste d'identificateurs de zone de suivi TAI, et où les informations de conduite comprennent une vitesse de déplacement du véhicule (100) ou un nom et un type de chaussée sur laquelle le véhicule (100) se déplace ou un type de véhicule (100).

11. Terminal (100, 600) selon la revendication 7, où le contrôleur (620) est en outre prévu pour commander le terminal (100, 600) pour :
effectuer la communication V2X avec le serveur V2X local (112, 113) via un canal de service de diffusion/multidiffusion multimédia MBMS, et
recevoir via l'émetteur-récepteur (610) les informations de fourniture pour une utilisation du canal MBMS déterminée sur la base des informations de mobilité reçues du serveur V2X macro (110).

12. Terminal (100, 600) selon la revendication 7, où le contrôleur (620) est en outre prévu pour commander l'établissement par le terminal (600) via une station de base (132, 133), de la connexion au serveur V2X local (112, 113) au moyen de l'émetteur-récepteur (610) en tant que nœud d'accès de la zone de saut suivant et une passerelle (122, 123) connectée au serveur V2X local (112, 113).
